# EUROPEAN PATENT APPLICATION

(11) **EP 2 775 760 A1**
(43) Date of publication of application: **10.09.2014**
(21) Application number: 13305242.3
(22) Date of filing: 04.03.2013
(51) Int. Cl.: H04W 36/00, H04W 36/04

(54) **A method for performing a handover of a user terminal, leading to a flexible RAN sharing restricted to certain cells within a tracking area**

(71) Applicant: ALCATEL LUCENT, 92100 Boulogne-Billancourt (FR)
(72) Inventor: Stanze, Oliver, 70435 Stuttgart (DE); Doetsch, Uwe, 70435 Stuttgart (DE)
(74) Representative: Kleinbub, Oliver

(57) **Abstract**

The invention concerns a method for performing a handover of a user terminal (UE_A_MA) in a wireless communication network (CN), wherein a permission for performing a handover from a base station of a first operator (MA) to a base station of a second operator (PB, MB) depends on at which of said first and second operator said user terminal (UE_A_MA) is registered, and a base station (MA) and a user terminal (UE_A_MA) therefor.

## Description

### Field of the invention

The invention relates to a method for performing a handover of a user terminal in a wireless communication network, and a base station and a user terminal adapted to perform said method.

### Background

Radio Access Network (RAN) sharing enables operators to share the same radio equipment and thereby reduce their deployment costs. According to the Third Generation Partnership Project Long Term Evolution (3GPP LTE) standard, RAN sharing by multiple operators is supported, as e.g. described in the 3GPP technical report TR 36.300, chapter 10.1.7.

### Summary

To enable RAN sharing in LTE, each cell broadcasts the so-called Public Land Mobile Network identifier (PLMN ID) of each operator, whereby the PLMN IDs for all cells combined in a so-called tracking area are the same, as e.g. described in the 3GPP technical specification TS 23.251, chapter 4.2.2. RAN sharing is based on a multi-to-multi relationship between E-UTRAN nodes (E-UTRAN = Evolved Universal Telecommunications System Terrestrial Radio Access Network), i.e. so-called evolved Node Bs (eNBs), and Evolved Packet Core (EPC) nodes, as e.g. mobility management entities (MMEs), which is realized by the so-called S1-flex concept, as e.g. described in the 3GPP technical report TR 23.882, chapter 7.16.3. During attachment to the network, the user terminals of different operators which are served by the same shared eNB are assigned to different MMEs. As the PLMN IDs shall be the same for all cells within a certain tracking area, RAN sharing is currently limited to all cells in the tracking area. It is not possible to restrict the RAN sharing to certain cells within this tracking area. But such a partial RAN sharing makes sense in different scenarios, as e.g. in so-called heterogeneous network (HetNet) scenarios.

In heterogeneous network (HetNet) scenarios using standards like e.g. a 3GPP LTE standard, so-called pico base stations with their pico cells are placed under the coverage of a so-called macro base station. A pico base station typically covers a small area e.g. in buildings, train stations or aircrafts due to its lower power, whereas a macro base station covers a larger area than a pico base station, as e.g. an outdoor area. Pico base stations enable a densification of a wireless cellular network by providing additional capacity to certain HotSpots.

In a HetNet scenario, an operator may deploy a pico cell at a certain hotspot, e.g. a coffee shop, to offload traffic from its macro layer. Depending on the characteristics of this HotSpot it would not make sense that another operator installs another pico cell at this HotSpot. Instead the operators could profit from sharing this and possibly other pico cells and thereby reducing CAPEX and OPEX. However, macro cells shall not necessarily be shared between the operators.

The object of the invention is thus to propose a method for performing a handover of a user terminal in a wireless communication network leading to a flexible RAN sharing restricted to certain cells within a tracking area.

The basic idea of embodiments of the invention is to implement PLMN specific, i.e. operator specific, handovers on top of a RAN sharing which applies to all cells in a tracking area.

E.g., a user terminal registered with operator A and served by a pico base station of operator B is allowed to perform a handover to a macro base station of operator A, whereas a user terminal registered with operator B and served by said pico base station of operator B is not allowed to perform a handover to said macro base station of operator A. The configuration of handover (HO) measurements and target cell selection may differ per user terminal, depending on the PLMN ID of the operator of the user terminal. E.g., the user terminal registered with operator A and served by the pico base station of operator B can be configured to only perform HO measurements on a carrier used by operator A, whereas the user terminal registered with operator B and served by said pico base station of operator B can be configured to only perform HO measurements on a carrier used by operator B.

The object is thus achieved by method for performing a handover of a user terminal in a wireless communication network, wherein a permission for performing a handover from a base station of a first operator to a base station of a second operator depends on at which of said first and second operator said user terminal is registered.

The object of the invention is furthermore achieved by a base station of a first operator for performing a handover of a user terminal in a wireless communication network, wherein said base station is adapted to perform a handover from said base station of the first operator to a base station of a second operator dependent on at which of said first and second operator said user terminal is registered.

The object of the invention is furthermore achieved by a user terminal that can be handed over in a wireless communication network from a base station of a first operator to a base station of a second operator, wherein said user terminal is adapted to perform a handover measurement with a configuration of said handover measurement dependent on at which of said first and second operator said user terminal is registered.

The invention is described in the following within the framework of 3GPP LTE, however as the invention is not restricted to 3GPP LTE, but can in principle be applied in other networks that can apply a handover of a user terminal in a wireless communication network leading to a flexible sharing of access nodes from different operators, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows a message sequence chart for performing handovers of user terminals registered with different operators according to embodiments of the invention.

### Description of the embodiments

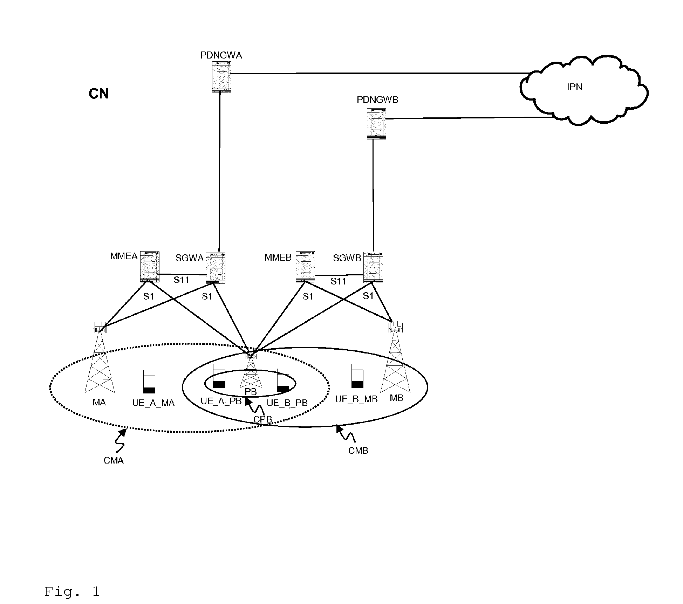

Fig. 1 shows as an example of a communication network in which the invention can be implemented a communication network CN according to the standard 3GPP LTE.

Said communication network CN comprises a macro base station MA of a first operator A, a macro base station MB of a second operator B, a pico base station PB of the second operator B, a user terminal UE_A_MA registered with the first operator A and served by the macro base station MA of the first operator A, a user terminal UE_B_MB registered with the second operator B and served by the macro base station MB of the second operator B, a user terminal UE_A_PB registered with the first operator A and served by the pico base station PB of the second operator B, a user terminal UE_B_PB registered with the second operator B and served by the pico base station PB of the second operator B, serving gateways SGWA and SGWB of the first operator A and the second operator B respectively, packet data network gateways PDNGWA and PDNGWB of the first operator A and the second operator B respectively, and mobility management entities MMEA and MMEB of the first operator A and the second operator B respectively.

The user terminal UE_A_MA is connected via a radio connection to the macro base station MA, the user terminals UE_A_PB and UE_B_PB are connected via radio connections to the pico base station PB, and the user terminal UE_B_MB is connected via a radio connection to the macro base station MB. In future evolutions of LTE, each of the user terminals UE_A_MA, UE_B_MB, UE_A_PB and UE_B_PB could also be connected via radio connections to multiple macro and/or pico base stations. The macro base station MA is in turn connected to the serving gateway SGWA and to the mobility management entity MMEA, i.e. to the evolved packet core (EPC) of operator A, via a so-called S1 interface. In the same way, the macro base station MB is connected to the serving gateway SGWB and to the mobility management entity MMEB, i.e. to the evolved packet core (EPC) of operator B, via an S1 interface. The pico base station PB is connected to both the serving gateway SGWA and the mobility management entity MMEA of operator A, and the serving gateway SGWB and the mobility management entity MMEB of operator B.

The serving gateway SGWA is connected to the packet data network gateway PDNGWA, which is in turn connected to an external IP network IPN, and the serving gateway SGWB is connected to the packet data network gateway PDNGWB, which is in turn connected to the external IP network IPN. Furthermore, the serving gateway SGWA is connected to the mobility management entity MMEA via a so-called S11 interface, and the serving gateway SGWB is connected to the mobility management entity MMEB also via a so-called S11 interface.

The macro base stations MA and MB are connected to the pico base station PB via a so-called X2 interface, which is not shown in fig. 1 for the sake of simplicity. The macro base stations MA and MB can be connected to the pico base station PB via radio connections or via fixed line connections.

The S1 interface is a standardized interface between a base station, i.e. an eNodeB in this example, and the Evolved Packet Core (EPC). The S1 interface has two flavours, S1-MME for exchange of signalling messages between one of the base stations MA, MB, and PB, and the respective mobility management entity MMEA or MMEB, and S1-U for the transport of user datagrams between one of the base stations MA, MB, and PB, and the respective serving gateway SGWA and SGWB.

The X2 interface is added in 3GPP LTE standard primarily in order to transfer the user plane signal and the control plane signal during handover.

The serving gateways SGWA and SGWB perform routing of IP user data between a respective base stations MA, MB, or PB, and the respective packet data network gateway PDNGWA or PDNGWB. Furthermore, the serving gateways SGWA and SGWB serve as a mobile anchor point during handover either between different base stations, or between different 3GPP access networks.

The packet data network gateways PDNGWA and PDNGWB represent the interface to the external IP network IPN and terminate the so-called EPS bearer (EPS = Evolved Packet System) which is established between a user terminal UE_A_MA, UE_B_MB, UE_A_PB or UE_B_PB and the respective serving macro base station MA or MB or pico base station PB.

The mobility management entities MMEA and MMEB perform tasks of the subscriber management and the session management, and also perform the mobility management during handover between different access networks.

The pico base station PB and the related coverage area CPB of the pico cell are placed under the coverage area CMA of the macro base station MA and under the coverage area CMB of the macro base station MB.

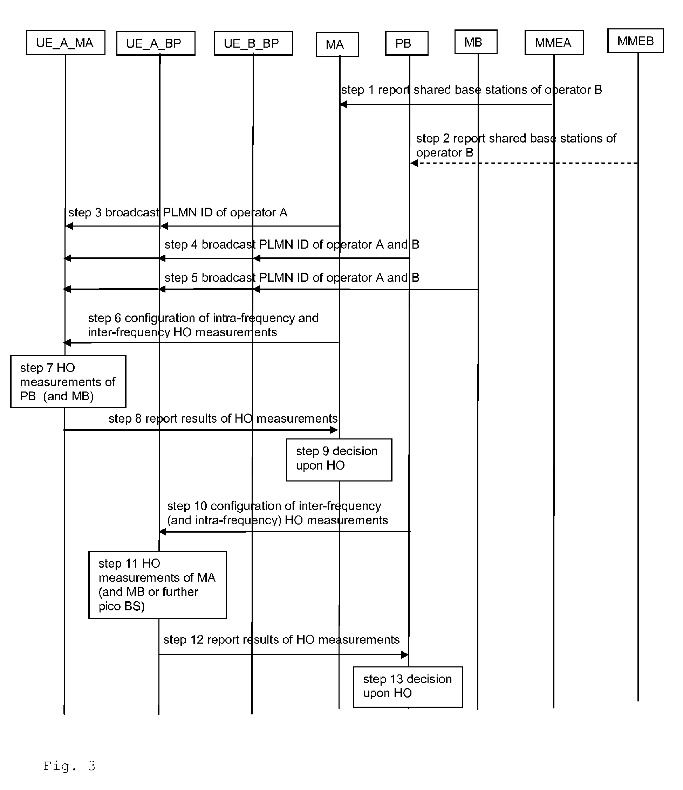

In the following, according to embodiments of the invention, methods for performing a handover of a user terminal in a wireless communication network as depicted in fig. 1 leading to a flexible RAN sharing restricted to certain cells within a tracking area are proposed. The detailed message sequence of said methods will be described below under fig. 3.

The description of the embodiments is based on a shared pico base station PB of operator B as shown in fig. 1, which means that both user terminals registered with operator A and user terminals registered with operator B can be served by the shared pico base station PB of operator B.

The macro base station MA of operator A and the macro base station MB of operator B use different carriers and have overlapping coverage areas. The pico base station PB of operator B operates at the same frequency as the macro base station MB.

As already mentioned above, the pico base station PB is shared with operator A. By applying the so-called S1-flex concept, the pico base station PB is connected with the MMEA of operator A and with the MMEB of operator B. User terminals served by the pico base station PB which belong to operator A, as e.g. user terminal UE_A_PB, will be attached to MMEA, and user terminals served by the pico base station PB which belong to operator B, as e.g. user terminal UE_B_PB, will be attached to MMEB.

The macro base station MA shall not be shared between the operators A and B, i.e. only user terminals registered with operator A can be served by the macro base station MA. Thus, the macro base station MA broadcasts only the PLMN ID of operator A. The pico base station PB is shared between the operators A and B and belongs to the same tracking area as the macro base station MB which is not shared. Both the pico base station PB and the macro base station MB broadcast the PLMN ID of operators A and B, as in principle RAN sharing of operator B applies.

As described above, fig. 1 also shows four different user terminals:
- UE_A_MA: user terminal registered with operator A, which is served by the macro base station MA.
- UE_A_PB: user terminal registered with operator A, which is served by the pico base station PB.
- UE_B_MB: user terminal registered with operator B, which is served by the macro base station MB.
- UE_B_PB: user terminal registered with operator B, which is served by the pico base station PB.

In the following the configuration of HO measurements and target cell selection for the different user terminals are discussed:
- UE_B_MB and UE_B_PB: For said two user terminals, the configuration of HO measurements and target cell selection does not change compared to a classical co-channel HetNet deployment. The user terminals are configured to perform intra-frequency measurements, i.e. they perform HO measurements on the carrier used by the operator B. Said HO measurements indicate whether a neighboring macro or pico cell of operator B is a potential candidate for a handover. There are no restrictions in the target cell selection for said two user terminals.
- UE_A_MA: The configuration of HO measurements for UE_A_MA consists of two parts. The first part are intra-frequency HO measurements of neighboring macro and pico cells of operator A. Based on said HO measurements, a handover of the user terminal UE_A_MA to neighboring cells of operator A may be initiated. For said handovers, there are no restrictions in the target cell selection. The second part are inter-frequency HO measurements for the carrier which is used by operator B. To enable said HO measurements, the macro base station MA requires information regarding the carrier of shared equipment from operator B in its proximity. E.g. said information may be configured via Operation and Maintenance (O&M). Due to the configuration of inter-frequency HO measurements, the user terminal UE_A_MA can now report HO measurements for the macro base station MB and the pico base station PB. Because only the pico base station PB is shared in the embodiment, the target cell selection for handover is restricted to the pico base station PB. The macro base station MA will only initiate a inter-frequency handover for the user terminal UE_A_MA to the pico base station PB, but never to the macro base station MB. To enable this, the macro base station MA also requires information regarding whether a reported base station of operator B is shared or not. E.g. said information may be configured via O&M.

- UE_A_PB: The configuration of HO measurements for the user terminal UE_A_PB only consists of inter-frequency HO measurements of the carrier used by the operator A, and there are no restrictions in the target cell selection, i.e. each handover of the user terminal UE_A_PB will be to a cell owned by the operator A.

As described above, the configuration of HO measurements of a user terminal which is served by the pico base station PB depends on the operator of the user terminal. Therefore, the pico base station PB has to classify their served user terminals depending on their operator and has to apply operator or PLMN ID specific HO measurement configurations.

In a further embodiment of the invention, the macro base station MA restricts the inter-frequency HO measurements performed by the user terminal UE_A_MA on the carrier which is used by the operator B to pico base stations of operator B, as handovers to macro base stations of operator B shall not be allowed. Thus, the macro base station MA configures a black list for the HO measurements which contains all macro base stations of operator B which are located in the proximity of the macro base station MA. By using black lists, the HO measurement and reporting overhead for user terminals is significantly reduced. Said black list can e.g. be either configured by the macro base station MA by detecting neighboring macro base stations, or by Operation and Maintenance (O&M).

In a further embodiment of the invention, the pico base station PB also configures intra-frequency HO measurements on the carrier which is used by the operator B for the user terminal UE_A_PB, with a blacklist containing all macro base stations of the operator B which are located in the proximity of the pico base station PB. This enables to perform handovers from the pico base station PB to a further pico base station of operator B which is also shared. Said black list can e.g. be either configured by the pico base station PB by detecting neighboring macro base stations of the operator B, or by Operation and Maintenance (O&M).

In a further embodiment of the invention, the above-described target cell restrictions in the HO process may be realized by so-called Closed-Subscriber-Groups (CSG). E.g. the shared base stations of operator B are open for user terminals belonging to a first Closed-Subscriber-Group CSG_{B,shared}, while the non-shared base stations of operator B are open for user terminals belonging to a second Closed-Subscriber-Group CSG_{B,non-shared}. User terminals registered with the operator B are members of CSG_{B,shared} and CSG_{B,non-shared}, and therefore are allowed to perform handovers from and to shared and non-shared base stations of the operator B. User terminals registered with the operator A are members of CSG_{B,shared} but are not members of CSG_{B,unshared} and therefore are not allowed to be served by unshared base stations of the operator B. This approach requires coordination of Closed-Subscriber-Groups between different operators.

In more general embodiments of the invention, the macro base station MB in the embodiments described above corresponds to unshared base stations of the operator B, and the pico base station PB corresponds to shared base stations of the operator B.

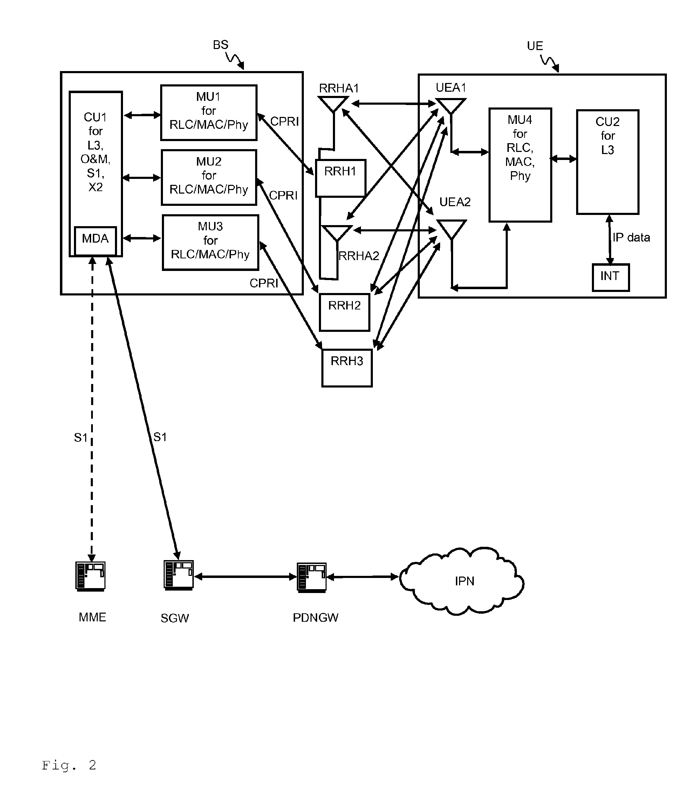

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEAL and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, methods for performing handovers of user terminals registered with different operators, as e.g. depicted in fig. 1, with a flexible RAN sharing restricted to certain cells are described according to embodiments of the invention.

Fig. 3 schematically shows a message sequence chart for performing handovers of user terminals registered with different operators according to embodiments of the invention.

Fig. 3 shows the transmission of signalling messages and HO measurement result messages between the mobility management entities MMEA and MMEB, the macro base stations MA and MB, the pico base station PB, and the user terminals UE_A_MA, UE_A_PB and UE_B_PB as e.g. depicted in fig. 1 and described above. However, in further embodiments of the invention, functionalities of the mobility management entities MMEA and MMEB as described below could also be implemented in a network node controlled by Operation and Maintenance.

In step 1, the mobility management entity MMEA of operator A reports to the macro base station MA which base stations of operator B are shared, i.e. can be used by user terminals registered with operator A. The information which which base stations of operator B are shared can e.g. be configured by Operation and Maintenance (O&M). Said shared base stations of operator B can e.g. comprise a dedicated subset of the base stations of operator B, or all or a part of the pico base stations of operator B in case of a HetNet scenario as depicted in fig. 1.

In step 2, the mobility management entity MMEB of operator B reports to the pico base station PB which base stations of operator B are shared. However, the step 2 is only necessary in embodiments of the invention which allow handovers of user terminals registered with the operator A from the pico base station PB to another pico base station of operator B.

In step 3, the macro base station MA only broadcasts the PLMN ID of the operator A to the two user terminals UE_A_MA and UE_A_PB. The macro base station MA does not broadcast the PLMN ID of the operator B, as the base stations of operator A are not shared, i.e. handovers of user terminals registered with the operator B to the macro base station MA are not allowed.

In step 4, the pico base station PB broadcasts the PLMN ID of the operator A and of the operator B to the three user terminals UE_A_MA, UE_A_PB and UE_B_PB, as the pico base station PB is shared, i.e. handovers of user terminals registered with the operator A to the pico base station PB are allowed.

In step 5, the macro base station MB broadcasts the PLMN ID of the operator A and of the operator B to the three user terminals UE_A_MA, UE_A_PB and UE_B_PB, as at least some of the base stations of operator B are shared. The decision whether or not a handover of a user terminal registered with the operator A to the macro base station MB is allowed can be taken by the source base station, as e.g. the pico base station PB for decision on a handover of the user terminal UE_A_PB, based on e.g. a black list indicating base stations of operator B which are not shared. In an alternative of the embodiment, the macro base station MB broadcasts the PLMN ID of the operator A only in case that the macro base station MB is shared with user terminals registered with the operator A.

In step 6, the macro base station MA sends a handover configuration message to the user terminal UE_A_MA. Said handover configuration message indicates that the user terminal UE_A_MA shall perform intra-frequency HO measurements on a carrier of operator A, and also inter-frequency HO measurements on a carrier of operator B, as handovers to at least some of the base stations of operator B are allowed. In an alternative of the embodiment, said handover configuration message also indicates which of the base stations of operator B are not shared in order to restrict the amount of HO measurements and the reporting overhead for reporting the results of the HO measurements to the macro base station MA to only shared base stations of operator B.

In step 7, the user terminal UE_A_MA performs inter-frequency HO measurements on a carrier of operator B of the pico base station PB and the macro base station MB in the proximity of the user terminal UE_A_MA. Said HO measurements can e.g. comprise measurements of pilot or reference signals transmitted from the pico base station PB and the macro base station MB. In case that the handover configuration message transmitted in step 6 also indicates which of the base stations of operator B are not shared, then the user terminal UE_A_MA only performs inter-frequency HO measurements on a carrier of operator B of the pico base station PB, as the macro base station MB shall not be shared.

In step 8, the user terminal UE_A_MA reports results of the HO measurements performed in step 7 to the macro base station MA, e.g. in form of channel qualities, signal to interference and noise ratios (SINR), Reference Signal Received Power (RSRP), or Reference Signal Received Quality (RSRQ) for connections to the different target base stations PB and MB.

In step 9, the macro base stations MA decides upon a handover of the user terminal UE_A_MA to the pico base station PB or the macro base station MB based on the reported results of the HO measurements. In an embodiment, the macro base stations MA also takes into account which base stations of operator B are shared and can be used as target base stations of a handover.

In step 10, the pico base station PB sends a handover configuration message to the user terminal UE_A_PB. Said handover configuration message indicates that the user terminal UE_A_PB shall perform inter-frequency HO measurements on a carrier of operator A. In an alternative of the embodiment, said handover configuration message also indicates that intra-frequency HO measurements on a carrier of operator B shall be performed in case that handovers to at least one further macro or pico base station of operator B are allowed. In a further alternative of the embodiment, said handover configuration message also indicates which of the base stations of operator B are not shared in order to restrict the amount of HO measurements and the reporting overhead for reporting the results of the HO measurements to the pico base station PB to only shared base stations of operator B.

In step 11, the user terminal UE_A_PB performs inter-frequency HO measurements on a carrier of operator A of the macro base station MA. Said HO measurements can e.g. comprise measurements of pilot or reference signals transmitted from the macro base station MA. In case that the handover configuration message transmitted in step 10 also indicates that intra-frequency HO measurements on a carrier of operator B shall be performed, then the user terminal UE_A_PB also performs said intra-frequency HO measurements. In case that the handover configuration message transmitted in step 10 also indicates which of the base stations of operator B are shared, then the user terminal UE_A_PB only performs intra-frequency HO measurements on a carrier of operator B of said shared base stations.

In step 12, the user terminal UE_A_BP reports results of the HO measurements performed in step 11 to the pico base station PB, e.g. in form of channel qualities, signal to interference and noise ratios (SINR), Reference Signal Received Power (RSRP), or Reference Signal Received Quality (RSRQ) for connections to the different target base stations MA and possibly further base stations of operator B.

In step 13, the pico base stations PB decides upon a handover of the user terminal UE_A_BP to the macro base station MA or possibly to further base stations of operator B based on the reported results of the HO measurements. In an embodiment, the pico base stations PB also takes into account which base stations of operator B are shared and can be used as target base stations of a handover.

In the embodiments described above and depicted e.g. in figs. 1 and 3, the corresponding processing steps can be performed e.g. in the modem unit boards MU1-MU3 and the control unit board CU1 of the pico base station PB or the macro base stations MA and MB, and in the modem unit board MU4 and the control unit board CU2 of the user terminals UE_A_MA, UE_B_MB, UE_A_PB and UE_B_PB as depicted in fig. 2 and described above.

## Claims

1. A method for performing a handover of a user terminal (UE_A_MA) in a wireless communication network (CN), wherein a permission for performing a handover from a base station of a first operator (MA) to a base station of a second operator (PB, MB) depends on at which of said first and second operator said user terminal (UE_A_MA) is registered.

2. A method according to claim 1, wherein a configuration of a handover measurement of said user terminal (UE_A_MA) depends on at which of said first and second operator said user terminal (UE_A_MA) is registered.

3. A method according to claim 1 or 2, wherein the operator of said first and second operator at which said user terminal (UE_A_MA) is registered, is indicated by a public land mobile network identifier.

4. A method according to any of the preceding claims, wherein said base station of the first operator (MA) knows to which base stations of the second operator (PB, MB) a handover of a user terminal registered at the first operator (UE_A_MA, UE_A_PB) is allowed.

5. A method according to claim 4, wherein a handover measurement of said user terminal registered at the first operator (UE_A_MA, UE_A_PB) is restricted to the base stations of the second operator (PB, MB) to which a handover of the user terminal registered at the first operator is allowed.

6. A method according to claim 4 or 5, wherein said base station of the first operator (MA) knows to which base stations of the second operator (PB, MB) a handover of a user terminal registered at the first operator (UE_A_MA, UE_A_PB) is allowed by at least one of the group of detection of neighboring base stations of the second operator (PB, MB) and configuration by Operation and Maintenance.

7. A method according to any of the preceding claims, wherein an additional handover of a user terminal registered at the first operator (UE_A_PB) from the base station of the second operator (PB) to a further base station of the second operator (MB) is only allowed for certain base stations of the second operator (MB).

8. A method according to claim 7, wherein a handover measurement of the user terminal registered at the first operator (UE A PB) for said additional handover from the base station of the second operator (PB) to the further base station of the second operator (MB) is restricted to said certain base stations of the second operator (MB).

9. A method according to claim 7 or 8, wherein said base station of the second operator (PB) knows said certain base stations of the second operator (MB) by at least one of the group of detection of neighboring base stations of the second operator (PB, MB) and configuration by Operation and Maintenance.

10. A method according to any of the claims 7, 8 or 9,
wherein said certain base stations of the second operator are pico base stations.

11. A method according to any of the claims 4, 5 or 6,
wherein said base stations of the second operator (PB, MB) to which a handover of a user terminal registered at the first operator (UE-A-MA, UE_A_PB) is allowed are pico base stations (PB).

12. A method according to any of the preceding claims, wherein
• user terminals registered at the first operator (UE_A_MA, UE_A_PB) are arranged into a first group,
• user terminals registered at the second operator (UE_B_MB, UE_B_PB) are arranged into a second group,
• and the permission for performing the handover of said user terminal (UE_A_MA) to the base station of the second operator (PB, MB) depends on at which group of said first and second group said user terminal (UE_A_MA) belongs to.

13. A base station of a first operator (MA) for performing a handover of a user terminal (UE_A_MA) in a wireless communication network, wherein said base station (MA) is adapted to perform a handover from said base station of the first operator (MA) to a base station of a second operator (PB, MB) dependent on at which of said first and second operator said user terminal (UE_A_MA) is registered.

14. A user terminal (UE_A_MA) that can be handed over in a wireless communication network from a base station of a first operator (MA) to a base station of a second operator (PB, MB), wherein said user terminal (UE_A_MA) is adapted to perform a handover measurement with a configuration of said handover measurement dependent on at which of said first and second operator said user terminal (UE_A_MA) is registered.

15. A communication network for mobile communication comprising at least one base station according to claim 13.
